# EUROPEAN PATENT APPLICATION

(11) **EP 2 528 323 A2**
(43) Date of publication of application: **28.11.2012**
(21) Application number: 12162132.0
(22) Date of filing: 29.03.2012
(51) Int. Cl.: H04N 5/63

(54) **Power supply for a solid-state multi-media playback system**

(30) Priority: 27.05.2011 CN 201110140798
(71) Applicant: Novatek Microelectronics Corp., HsinChu 300 (TW)
(72) Inventor: Jiang, Jian-De, 710048 Xian (CN); Wu, YONG, Shanghai (CN)
(74) Representative: Becker Kurig Straus

(57) **Abstract**

A system on Chip (SOC) is disclosed. The SOC comprises a normal block powered by a normal power supply; a standby block powered by a standby power supply; and a monitoring block powered by a monitoring power supply, wherein the normal block, the standby block, and the monitoring block are powered independently.

## Description

### Field of the Invention

The present invention relates to a system on chip (SOC) for a multimedia playback system, and more precisely, to a SOC with an independent monitoring circuit, capable of being powered independently.

### Background of the Invention

With advances in entertainment and multimedia industry, TVs have become a main leisure tool for most people, not only broadcasting cable or wireless TV programs, but displaying images of devices, such as DVD players, BD players, game consoles, computer systems, etc., via related interfaces. Meanwhile, with the progress of technology, in addition to having significant improvement in display quality, TVs are becoming increasingly rich in functionality. Functions, such as video recording, picture in picture (PIP), memory card reading, automatic brightness adjusting, etc., have been gradually configured in new products listed.

In addition to the above functions, a TV can also cooperate with a monitoring system, to detect an environment around the TV. For example, the monitoring system detects movements around the TV, so as to control the TV to be turned on or off. As a result, when a user approaches the TV, the monitoring system detects movements generated around the TV, and controls the TV to be turned on. After a while, if the monitoring system does not detect movements around the TV, it will control the TV to be turned off. Such a function allows the TV to be automatically turned on instead of manually turned on when the user approaches the TV, and to be automatically turned off when the user leaves and forgets to turn off the TV.

However, in the prior art, the TV and the monitoring system are still two independent systems. With the above combination it is hard to obtain excellent performance in both cost and control aspects. Therefore, in the prior art, the monitoring system is integrated into the TV to effectively reduce cost. This kind of structure is not affected when the TV is activated; the monitoring system still turns off the TV, when detecting leave of the user. However, the monitoring system is shut down when the TV is shut down, such that the monitoring system cannot automatic turn on the TV, which reduces advantages of integrating the monitoring system.

Therefore, as to the manufacturers of TVs, if reducing cost is required, the manufacturers have to integrate the monitoring system into the TV, such that the function of automatic turn-on/off is limited. If improvement on the function of automatic turn-on/off is required, the manufacturers have to let the TV and the monitoring system to be independent, which will necessary lead to cost increases. Such is the dilemma to the manufacturers of TVs.

### Summary of the Invention

This in mind, the application aims at providing a system on chip (SOC), a multimedia playback system, and a power supply method thereof to solve the abovementioned problem.

This is achieved by a SOC, a multimedia playback system and a power supply method according to claims 1, 5 and 10. The dependent claims pertain to corresponding further developments and improvements.

As will be seen more clearly from the detailed description following below, the claimed SOC comprises a normal block powered by a normal power supply, a standby block powered by a standby power supply, and a monitoring block powered by a monitoring power supply, wherein the normal block, the standby block, and the monitoring block can be powered independently.

### Brief Description of the Drawings

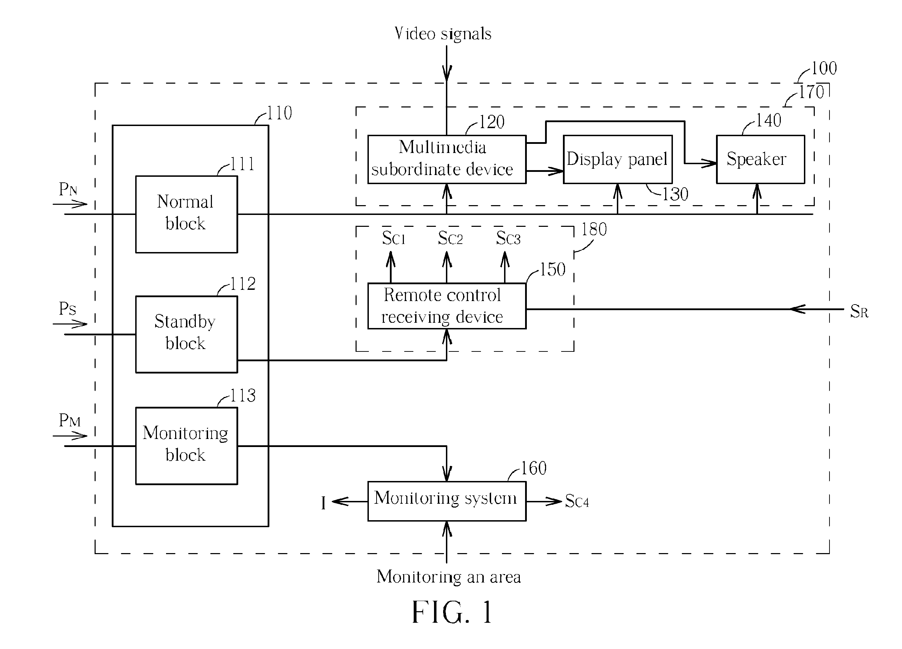

Fig. 1 illustrates a schematic diagram of a multimedia playback system according to an embodiment of the present invention.

### Detailed Description

Please refer to Fig. 1, which illustrates a schematic diagram of a multimedia playback system 100 according to an embodiment of the present invention. The multimedia playback system 100 comprises a system on chip (SOC) 110, a display device 170, a standby device 180 and a monitoring system 160. The display device 170 is mainly utilized to display images, and comprises a multimedia subordinate device 120, a display panel 130, and a speaker 140. The standby device 180 is mainly utilized to maintain basic operations of the multimedia playback system 100 when the multimedia system 100 is shut down, and comprises a remote control receiving device 150. The SOC 110 comprises a normal block 111, a standby block 112 and a monitoring block 113. In addition, the multimedia playback system 100 can be a TV with a monitoring function in realization. The operation principle of the multimedia playback system 100 is illustrated as follows.

The SOC 110 receives and provides a normal power supply P_{N}, a standby power supply P_{S} and a monitoring power supply P_{M} for the normal block 111, the standby block 112 and the monitoring block 113, respectively. The normal power supply P_{N} is provided for the multimedia subordinate device 120, the display panel 130 and the speaker 140. The standby power supply P_{S} is provided for the remote control receiving device 150. The monitoring power supply P_{M} is provided for the monitoring system 160. The normal block 111, the standby block 112 and the monitoring block 113 of the SOC 110 can be respectively controlled to be turned on/off. That is, the normal power supply P_{N}, the standby power supply P_{S}, and the monitoring power supply P_{M} is considered as three independent power supplies. For example, the monitoring power supply P_{M} can normally output when the normal power supply P_{N} does not output. Furthermore, hereinafter, a turn-off (standby) status of the multimedia playback system 100 is defined as the multimedia playback system 100 turns off the normal power supply P_{N}, outputs the standby power supply P_{S} and selectively outputs or does not output the monitoring power supply P_{M}. And a turn-on status of the multimedia playback system 100 is defined as the multimedia playback system 100 outputs the normal power supply P_{N}, outputs the standby power supply P_{S}, and selectively outputs or does not output the monitoring power supply P_{M}. That is, whether the multimedia system 100 is in the turn-on or the turn-off status, the standby power supply P_{S} is always outputted, and the monitoring power supply is decided whether to be outputted by a user.

The remote control receiving device 150 is utilized to receive a remote control signal S_{R}, and to accordingly generate control signals S_{C1}, S_{C2} and S_{C3}. More precisely, the control signals S_{C1} and S_{C2} are utilized to respectively control the normal power P_{N} to be turned on or turned off. And the control signal S_{C3} is utilized to control operation modes of the multimedia subordinate device 120. For example, the user sends the remote control signal S_{R} through a remote controller. After the remote control signal S_{R} is received and processed by the remote control receiving device 150, the remote control receiving device 150 controls the TV to be turned on/off through the control signal S_{C1}, controls the monitoring system 150 and the monitoring block 113 whether to be active through the control signal S_{C2}, or controls the multimedia subordinate device 120 and the normal block 111 to execute functions, such as channel tuning, through the control signal S_{C3}.

The monitoring system 160 and the monitoring block 113 are utilized to monitor an area, record images of the area, and output the recorded images I. Then, the monitoring system 160 and the monitoring block 113 output a control signal S_{C4} according to the alterations of the recorded images I. Simultaneously, the recorded images I can be displayed to the user via the display panel 130. In an embodiment, the area can be an environment around the multimedia playback system 100, and the control signal S_{C4} is generated when there is a moving object in the environment around the multimedia playback system 100. For example, when the user approaches the multimedia playback system 100, the control signal S_{C4} is generated to control the normal power supply P_{M} to be activated and the normal block 111 to operate, to turn on the TV. Or, when the user leaves the multimedia playback system 100, the control signal S_{C4} is generated to control the normal power supply P_{M} to be turned off and the normal block 111 not to operate, to turn off the TV. Moreover, after a time period that both the monitoring system 160 and the monitoring block113 do not detect movements around the multimedia playback system 100 (e.g. the user is not around the multimedia playback system 100), the control signal S_{C4} is generated to control the normal power supply PM to be turned off and the normal block 111 not to operate, to turn off the TV.

The normal block 111 of the SOC 110 and the multimedia subordinate device 120 are utilized to receive video signals, to accordingly control the display panel 130 to display images, and the speaker 140 to broadcast sounds. More precisely, the normal block 111 of the SOC 110 demodulates or decompresses video signals into processed data, selectively provides the processed data for the display panel 130 according to the control signal S_{C3}, to display images, and provides sounds for the speaker 140 to output the sounds (i.e. channel tuning).

The monitoring area of the multimedia playback system 100 or the setting of the monitoring power supply P_{M} can be adjusted according to different applications. For example, in a first embodiment, a monitoring area of the multimedia playback system 100 is defined as the area around the multimedia playback system 100, and the monitoring power supply is always active. When the multimedia playback system 100 is in the turn-off status, the monitoring block 113 of the SOC 110 and the monitoring system 160 can normally detect the monitoring area around the multimedia playback system 100. When the user approaches the multimedia playback system 100, the monitoring block 113 of the SOC 110 and the monitoring system 160 detect alterations are generated from images of the monitoring area around the multimedia playback system 100, and accordingly control the multimedia playback system 100 to be turned on through the control signal S_{C4}. When the user leaves the multimedia playback system 100, the monitoring block 113 of the SOC 110 and the monitoring system 160 do not detect alterations are generated from images of the monitoring area of the multimedia playback system 100, and accordingly control the multimedia playback system 100 to be turned off through the control signal S_{C4}. As a result, the user does not need to manually turn on or turn off the multimedia playback system 100.

In a second embodiment, a monitoring area of the multimedia playback system 100 is defined as the area around the multimedia playback system 100, and the monitoring power supply PM is set to be activated when the multimedia playback system 100 is in the turn-off status. When the multimedia playback system 100 is in the turn-off status, the monitoring block 113 of the SOC 110 and the monitoring system 160 can normally detect alterations generated from images of the monitoring area around the multimedia playback system 100. When the user approaches the multimedia playback system 100, the monitoring block 113 of the SOC 110 and the monitoring system 160 detect the alterations are generated from the images of the monitoring area around the multimedia playback system 100, and accordingly control the multimedia playback system 100 to be turned on through the control signal S_{C4}. As a result, the user does not need to manually turn on the multimedia playback system 100.

In a third embodiment, a monitoring area of the multimedia playback system 100 is not defined as an area around the multimedia playback system 100, and the monitoring power supply P_{M} is always active. For example, the multimedia playback system 100 is disposed in a living room and the monitoring area is defined as a balcony. When the multimedia playback system 100 is in the turn-off status, the monitoring block 113 of the SOC 110 and the monitoring system 160 can normally detect the balcony. When alterations are generated from the images of the balcony, the monitoring block 113 of the SOC 110 and the monitoring system 160 control the multimedia playback system 100 to be turned on and simultaneously output the recorded images I. As a result, when a thief sneaks into the balcony, if the user is watching TV programs through the multimedia playback system 100 in the living room at this moment, the monitoring block 113 of the SOC 110 and monitoring system 160 switch the display panel 130 to display the recorded images I of the balcony. Or, when a thief sneaks into the balcony, if the user reads a book and the multimedia playback system 100 is in turn-off status, the monitoring block 113 of the SOC 110 and the monitoring system 160 control the multimedia playback system 100 to be turned on and display the recorded images I of the balcony. Therefore, even if the user turns off the multimedia playback system 100, the user can still receive necessary warnings by the multimedia playback system 100 of the present invention if an emergency occurs.

In a fourth embodiment, the multimedia playback system 100 sets the monitoring block 113 to be activated when the multimedia playback system 100 is in the turn-off status, and other settings are the same with the third embodiment. As a result, the multimedia playback system 100 saves power in comparison to the third embodiment while obtaining the same effect as the third embodiment.

A characteristic of the present invention is that in addition to receiving the normal power supply P_{N} and the standby power supply P_{S}, the SOC 110 further receives the monitoring power supply P_{M}, wherein the three power supplies operate independently, and are not affected by whether other power supplies are in the turn-on or turn-off status. In realization, the SOC 110 simultaneously integrates the above three circuitries into a single chip. Compared to the prior art, this disposition scheme is integrated in a single chip, to obtain lower cost, and each power supply operates independently, to complete functionality of the multimedia playback system 100.

To sum up, the multimedia playback system of the present invention utilizes techniques of SOC to further divide a monitoring block in the SOC, which cooperates with the monitoring system. Simultaneously, the power supply of the monitoring system and the monitoring block is not affected by whether the multimedia playback system is in the turn-on or turn-off status, so as to allow the monitoring system to operate independently. Therefore, the present invention can reduce manufacturing cost, simultaneously improve functionality of the multimedia playback system, and provide more convenience for users.

## Claims

1. A system on chip, abbreviated as SOC hereinafter, **characterized by** comprising:
a normal block, powered by a normal power supply;
a standby block, powered by a standby power supply; and
a monitoring block, powered by a monitoring power supply, wherein the normal block, the standby block, and the monitoring block are powered independently.

2. The SOC of claim 1, **characterized in that** the monitoring power supply is irrelevant to the normal power supply and the standby power supply.

3. The SOC of claim 1, **characterized in that** when the SOC is in a standby status, the normal block does not operate, the normal power supply is turned off, the standby block operates and is powered by the standby power supply, and the monitoring block selectively operates and is powered by the monitoring power supply.

4. The SOC of claim 1, **characterized in that** when the SOC is in a start-up status, the normal block operates and is powered by the normal power supply, the standby block operates and is powered by the standby power supply, and the monitoring block selectively operates and is powered by the monitoring block.

5. A multimedia playback system, **characterized by** comprising:
a system on chip, abbreviated as SOC hereinafter, comprising:
a normal block, powered by a normal power supply and operating, according to a first control signal;
a standby block, continuously powered by a standby power supply and operating; and
a monitoring block, powered by a monitoring power supply and operating;
a display device, coupled to the normal block and jointly powered by the normal power supply, for displaying images;
a standby device, coupled to the standby block and jointly powered by the standby power supply, for generating the first control signal; and
a monitoring system, coupled to the monitoring block and jointly powered by the monitoring power supply, for monitoring an area.

6. The multimedia playback system of claim 5, **characterized in that** the monitoring power supply is irrelevant to the normal power supply and the standby power supply.

7. The multimedia playback system of claim 5, **characterized in that** the monitoring system generates a second control signal when detecting alterations occurring in the area.

8. The multimedia playback system of claim 7, **characterized in that** the normal block outputs the normal power supply according to the first control signal and the second control signal.

9. The multimedia playback system of claim 5, **characterized in that** the standby device further outputs a third control signal, for controlling the monitoring block to output the monitoring power supply.

10. A method for powering a multimedia playback system, **characterized by** comprising:
providing a normal power supply and a standby power supply for the multimedia playback system; and
providing a monitoring power supply to a monitoring system of the multimedia playback system, wherein the monitoring power supply is irrelevant to the normal power supply and the standby power supply.
